# EUROPÄISCHE PATENTSCHRIFT

(11) **EP 1 044 121 B1**
(45) Veröffentlichungstag und Bekanntmachung des Hinweises auf die Patenterteilung: **06.03.2002**
(21) Anmeldenummer: 99924709.1
(22) Anmeldetag: 26.03.1999
(51) Int. Cl.: B60R 21/13, B60R 21/16

(54) **VORRICHTUNG UND VERFAHREN ZUR AUSLÖSUNG EINES INSASSENSCHUTZSYSTEMS BEI EINEM KRAFTFAHRZEUGÜBERSCHLAG**
DEVICE AND METHOD FOR TRIGGERING A PASSENGER PROTECTION SYSTEM DURING VEHICLE ROLLOVER
DISPOSITIF ET PROCEDE PERMETTANT LE DECLENCHEMENT D'UN SYSTEME DE PROTECTION DES PASSAGERS D'UN VEHICULE EN CAS DE TONNEAU

(30) Priorität: 30.03.1998 DE 19814154
(43) Veröffentlichungstag der Anmeldung: 18.10.2000
(73) Patentinhaber: SIEMENS AKTIENGESELLSCHAFT, 80333 München (DE)
(72) Erfinder: ACHHAMMER, Günter, D-93128 Regenstauf (DE); GLASER, Telmo, D-93051 Regensburg (DE)
(86) Internationale Anmeldenummer: DE9900936
(87) Internationale Veröffentlichungsnummer: WO9950103

(56) Entgegenhaltungen:
- EP-B- 0 430 813
- WO-A-97/49578
- WO-A-98/29280
- DE-C- 3 545 874
- GB-A- 2 314 187

## Beschreibung

Die Erfindung betrifft eine Vorrichtung und ein Verfahren zur Auslösung eines Insassenschutzsystems bei einem Kraftfahrzeugüberschlag. Der Ausdruck "Kraftfahrzeugüberschlag" umfaßt hier sowohl einen drohenden als auch einen tatsächlich erfolgenden Kraftfahrzeugüberschlag.

Insassenschutzsysteme, die bei einem Kraftfahrzeugüberschlag aktiviert werden können, umfassen zum Beispiel passive Rückhaltesysteme wie etwa einen Kopfairbag, einen Seitenairbag, ein Gurtstraffersystem, ein Gurtklemmersystem und/oder einen aufklappbaren Überrollbügel. Ferner läßt sich der Insassenschutz auch durch Einsatz von bei und nach einem Unfall aktivierbaren Systemen (Postcrash-Systeme) erhöhen, zu denen die Generierung eines Notrufsignals, das Öffnen der Zentralverriegelung, das Einschalten der Warnblinkanlage und/oder das Abschalten der Kraftstoffpumpe zählen.

Aus der DE 35 45 874 C1 ist eine Vorrichtung bekannt, bei der ein Trägheitsschalter vorgesehen ist, der bei Fahrzeugbeschleunigungen in der x- und y-Ebene des Fahrzeugs oberhalb eines bestimmten Beschleunigungswerts geschlossen wird und ein Insassenschutzsystem in Form eines Überrollbügels aktiviert. Parallel zum Trägheitsschalter liegt eine Serienschaltung aus Rollbewegungen des Kraftfahrzeugs erfassenden Neigungsschaltern und Federungsschaltern, durch die der Überrollbügel dann ausgelöst wird, wenn sowohl einer der Neigungsschalter anspricht als auch einer der Federungsschalter ein Ausfedern eines Kraftfahrzeug-Hinterrads signalisiert. Allerdings besteht unter gewissen Umständen dennoch die Gefahr eines unnötigen, überraschenden und damit sicherheitsgefährdenden Auslösens des Insassenschutzsystems, z.B. bei extremer Kurvenfahrt. Auch ist nicht in allen Unfallsituationen ein korrektes, frühzeitiges Auslösen des Insassenschutzsystems gewährleistet.

Aus der EP 0 430 813 B1 ist ein Insassenschutzsystem bekannt, das einen Gyrometer und drei Beschleunigungsmesser umfasst, die die Längs-, Quer- und Vertikalbeschleunigung des Kraftfahrzeugs ermitteln. Die Auslösevorrichtung des Insassenschutzsystems wird angesteuert, wenn entweder die kombinierte Längs- und Querbeschleunigung einen vorgegebenen Schwellwert überschreitet oder das Gyrometer-Ausgangssignal oberhalb einer bestimmten Schwelle liegt oder das über ein vorgegebenes Zeitintervall integrierte Gyrometer-Ausgangssignal eine bestimmte Schwelle überschreitet. Das Gyrometer-Ausgangssignal ist jedoch nicht auf ein festes Raumkoordinatensystem bezogen und erlaubt daher keinen festen Rückschluss auf den tatsächlichen Kraftfahrzeug-Neigungswinkel, bezogen auf die Horizontalebene. Die Festlegung der Auslöseschwellwerte bereitet hierbei gewisse Schwierigkeiten.

Aus der GB 23 14 187-A ist eine Vorrichtung gemäß dem Oberbegriff des Anspruchs 1 sowie ein Verfahren gemäß dem Oberbegriff des Anspruchs 5 bekannt. Dabei liefern ein Neigungswinkelsensor und ein Drehratensensor ihre Signale an eine Auswerteeinrichtung. In Abhängigkeit dieser beiden Signale wird das Überrollschutzmittel durch die Auswerteeinrichtung ausgelöst, wenn entweder der Neigungswinkel einen ersten Schwellwert übersteigt, oder wenn der Neigungswinkel einen zweiten, niedrigeren Schwellwert übersteigt und gleichzeitig die Drehrate zuzüglich des mit einer Konstante multiplizierten Neigungswinkels einen dritten Schwellwert übersteigt.

Der Erfindung liegt die Aufgabe zugrunde, eine Vorrichtung und ein Verfahren zur Auslösung eines KraftfahrzeugInsassenschutzsystems zu schaffen, das eine zuverlässige Auslöseentscheidung des Insassenschutzsystems bei einem Fahrzeugüberschlag ermöglicht.

Diese Aufgabe wird mit den im Patentanspruch 1 angegebenen Merkmalen bzw. mit den Maßnahmen gemäß Patentanspruch 5 gelöst. Vorteilhafte Ausgestaltungen der Erfindung sind in den Unteransprüchen angegeben.

Bei der Erfindung wird ein Drehratensensor, der die Geschwindigkeit einer Kraftfahrzeugdrehbewegung um die Kraftfahrzeug-Längsachse erfasst, gemeinsam mit einem Neigungssensor eingesetzt. Hierdurch sind beginnende Fahrzeugüberschläge frühzeitig sensierbar. Ein bevorstehender Überschlag läßt sich nämlich sehr rasch erkennen, da die durch den Drehratensensor gemessene Drehgeschwindigkeit eine solche Aussage zu einem ausreichend frühen Zeitpunkt bereitstellt. Eine Auslösung des Insassenschutzsystems erfolgt aber erst dann, wenn der Neigungssensor eine unfallverdächtige (absolute) Schräglage des Kraftfahrzeugs signalisiert. Da der beginnende Fahrzeugüberschlag bereits zuvor durch den Drehratensensor erkannt wurde, kann die Auslösung des Insassenschutzsystems dann nahezu verzögerungsfrei beim Ansprechen des Neigungssensors erfolgen. Der Neigungssensor dient somit als Safing-Sensor. Je nach Unfallsituation kann allerdings auch zunächst der Neigungssensor angesprochen haben, so daß das Insassenschutzsystem dann sofort ausgelöst wird, wenn nun auch der Drehratensensor anspricht.

Da zwei Sensoren bereitgestellt werden, die auf verschiedenen Meßprinzipien beruhen, läßt sich die Zuverlässigkeit des Insassenschutzsystems deutlich erhöhen. Beispielsweise kann der Drehratensensor auf dem Meßprinzip der Ausnutzung der Coriolis-Kraft beruhen, die auf bewegte Körper in einem rotierenden Bezugssystem wirkt. Bei dem Neigungssensor wird dagegen vorzugsweise die Gravitationskraft der Erde ausgenutzt. Der Neigungssensor kann hierbei die Neigung uniaxial um die Fahrzeug-Längsachse oder omnidirektional in der Fahrzeugebene erfassen.

Die vom Drehratensensor und Neigungssensor erzeugten Auslösesignale werden gewissermaßen in Form einer UND-Verknüpfung zusammengefaßt, so daß eine Zündung des Insassenschutzsystems lediglich bei Erfüllung beider Bedingungen stattfindet.

Da der Neigungssensor zumindest grob die absolute Winkellage des Fahrzeugs anzeigt, ist es gemäß der Erfindung möglich, eine Auslösung des Insassenschutzsystems bei einer Rückkippung des Kraftfahrzeugs aus der Vertikal- bzw. Dachlage oder Seitenlage des Fahrzeugs in die Normallage zu verhindern. Sofern nämlich das Insassenschutzsystem bei dem Umkippen des Kraftfahrzeugs aus irgendwelchen Gründen, beispielsweise wegen eines extrem verlangsamten Fahrzeugumkippens oder wegen einer starken absichtlichen Verkippung (z.B. extremes Aufbocken in einer Werkstatt) bei ausgeschalteter Zündung, nicht angesprochen haben sollte, kann sich die Gefahr ergeben, daß dann, wenn das Kraftfahrzeug durch die beteiligten Unfallpersonen oder Bergungspersonen wieder in die Normallage zurückgekippt werden sollte, das Insassenschutzsystem ausgelöst, beispielsweise der Überrollbügel schlagartig hochgeklappt, würde. Dies birgt eine Gefährdung der am oder im Fahrzeug befindlichen Personen in sich. Diese Gefährdung läßt sich dadurch vermeiden, daß der Neigungssensor zur Sperrung eines Auslösesignals verwendet wird. Schaltungstechnisch läßt sich dies in einfacher Weise dadurch realisieren, daß dann, wenn das Neigungssensorsignal über einen längeren Zeitraum hinweg eine oberhalb eines vorgegebenen Schwellwerts liegende Kipplage des Kraftfahrzeugs signalisiert, ein Auslösen des Insassenschutzsystems auch dann gesperrt wird, wenn das Ausgangssignal des Drehratensensors nachfolgend den Beginn einer Drehung signalisieren sollte. Wenn das Ausgangssignal des Drehratensensors vorübergehend auf Null abgesunken war, stellt dies ein zuverlässiges Kriterium für eine zwischenzeitlich stabil eingenommene Dach- oder Seitenlage, das heißt für einen stationären Zustand dar. Dieses Kriterium, daß der Neigungssensor längerfristig eine starke Verkippungslage signalisiert, das Drehratensensor-Ausgangssignal jedoch zumindest für ein gewisses kurzes Zeitintervall auf Null abgesunken ist, wird von der Steuereinrichtung dazu verwendet, eine nachfolgende Auslösung des Insassenschutzsystems zu sperren.

Der Neigungssensor ist vorzugsweise als Neigungsschalter ausgebildet, der anstelle eines analogen, einer weiteren Auswertung bedürfenden Signals lediglich ein "digitales" Signal "Ein/Aus" abgibt, das von der Auslöseeinrichtung oder Auswerteschaltung besonders einfach detektierbar ist und keine weitere Verarbeitung benötigt.

Alternativ kann der Neigungsschalter auch je einen eigenen Schaltsignalausgang für die beiden entgegengesetzt gerichteten, von ihm sensierbaren Neigungsrichtungen aufweisen, so daß er nicht nur das Überschreiten eines bestimmten Neigungsgrenzwerts, sondern auch die Kipprichtung anzeigt. Die Auswerteschaltung kann daher über ihren Algorithmus auch die Kipprichtung des Drehratensensors und Neigungssensors, und damit des Kraftfahrzeugs, erkennen.

Vorteilhafterweise läßt sich die Erfindung nicht nur in neu konzipierten Insassenschutzsystemen verwenden, sondern auch bei bereits bestehenden Systemen, beispielsweise Airbagsystemen, nachrüsten, indem dort ein Drehratensensor mit Neigungssensor eingebaut wird und die entsprechenden Auswerte- und Auslöseroutinen geladen werden.

Es ist auch möglich, den Drehratensensor, den Neigungssensor und gegebenenfalls die Auswerteschaltung in einem separaten Gehäuse ähnlich dem Satellitenkonzept bei Seitenairbags unterzubringen. Von dieser separaten Einheit wird bei Vorliegen der Auslösekriterien ein Zündkommando an ein zentrales Insassenschutzsystem-Steuergerät zur Aktivierung des Schutzsystems übertragen.

Die Erfindung wird nachstehend anhand von Ausführungsbeispielen unter Bezugnahme auf die Zeichnungen näher beschrieben. Es zeigen:
- Fig. 1: ein erstes Ausführungsbeispiel eines erfindungsgemäß ausgestatteten Insassenschutzsystems, und
- Fig. 2: eine andere Ausführungsform der erfindungsgemäßen Vorrichtung.

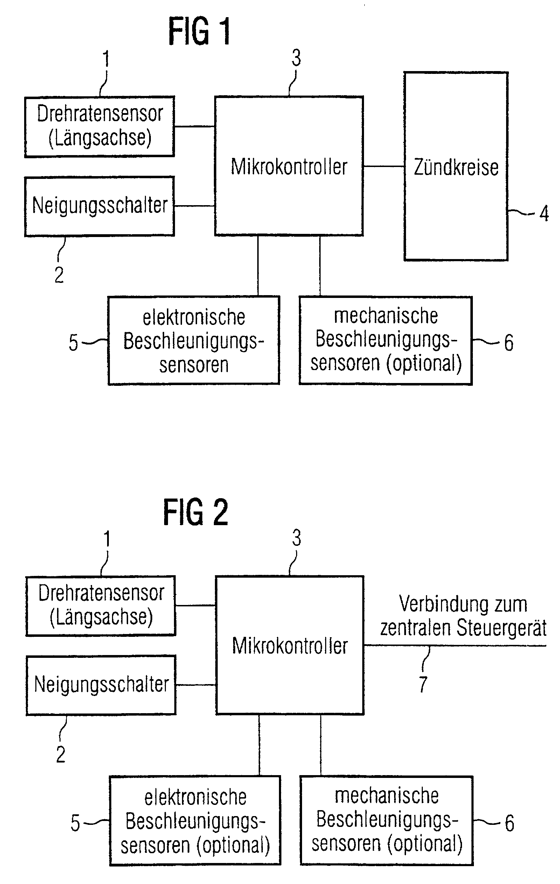

Das in Fig. 1 gezeigte Ausführungsbeispiel umfaßt einen Drehratensensor 1, der die Geschwindigkeit einer um die Kraftfahrzeug-Längsachse erfolgenden Drehbewegung des Kraftfahrzeugs mißt und beispielsweise durch einen elektronischen Gyrometersensor gebildet ist, und einen Neigungssensor 2, der die absolute Winkellage des Kraftfahrzeugs relativ zu der Horizontalebene angibt. Der Neigungssensor 2 ist vorzugsweise in Form eines mechanischen Neigungsschalters ausgebildet, der ein digitales Ausgangssignal "ein/aus" abgibt und bei Erreichen einer bestimmten Kraftfahrzeug-Winkellage seinen Ausgangssignalzustand wechselt. Der Neigungsschalter 2 kann den Neigungswinkel des Kraftfahrzeugs entweder uniaxial in Form des seitlichen Verkippungswinkels oder omnidirektional in der Fahrzeugebene erfassen. Eine Auslöseschaltung (Auswerteeinrichtung) 3 in Form eines Mikrokontrollers empfängt die Ausgangssignale der Sensoren 1, 2 und gelangt in Aktivierungsbereitschaftszustand, wenn die vom Drehratensensor 1 gemessene Drehgeschwindigkeit einen vorbestimmten Schwellwert überschreitet und das über ein bestimmtes Zeitintervall integrierte Ausgangssignal des Drehratensensors 1 einen bestimmten Schwellwert überschreitet, der jeweils die Gefahr eines Kraftfahrzeugüberschlags signalisiert. Die Auslöseschaltung 3 erzeugt jedoch nur dann tatsächlich ein Aktivierungssignal, wenn auch das Ausgangssignal des Neigungssensors 2 angibt, daß das Fahrzeug einen bestimmten Neigungswinkel erreicht oder überschritten hat. Das Aktivierungssignal wird an einen oder mehrere Zündkreise 4 angelegt, die das Insassenschutzsystem aktivieren, indem zum Beispiel eine oder mehrere Zündpillen gezündet werden. Das Insassenschutzsystem kann, wie eingangs bereits erwähnt, ein Seitenairbag- oder Kopfairbagsystem, ein Gurtstraffersystem, ein Gurtklemmersystem, ein aufklappbarer Überrollbügel oder ein sonstiges Schutzsystem wie beispielsweise ein Notrufsystem sein.

Die Auslöseschaltung 3 ist so ausgelegt, daß sie auch das Zeitverhalten der Ausgangssignale der Sensoren 1 und 2 überprüft. Wenn der Neigungsschalter 2 längerfristig, das heißt für mehr als ein bestimmtes Zeitintervall, von z.B. 1 bis 10 min., ein eine Fahrzeugverkippung anzeigendes Ausgangssignal erzeugt, der Drehratensensor 1 jedoch keine Drehbewegung mehr signalisiert, wird dies von der Auslöseschaltung 3 als stabil verkippter Fahrzeugzustand, beispielsweise Seitenlage oder Dachlage, eingestuft. Die Auslöseschaltung 3 sperrt dann die Erzeugung eines Aktivierungssignals selbst dann, wenn das Ausgangssignal des Drehratensensors 1 wieder anwachsen sollte. Eine solche Drehbewegung wird als gezielt ausgeübte Rückkippbewegung zur Zurückbringung des Kraftfahrzeugs in die Normallage eingestuft und die Aktivierung des Insassenschutzssystems hierbei zur Vermeidung einer Gefährdung der am Rückkippvorgang beteiligten und/oder noch im Fahrzeug befindlichen Personen gesperrt.

Die erfindungsgemäße Vorrichtung kann bei Bedarf noch zusätzlich mit elektronischen und/oder mechanischen Beschleunigungssensoren 5, 6 ausgestattet sein, die Fahrzeugbeschleunigungen in der Fahrzeug-Längsrichtung, -Querrichtung oder in Vertikalrichtung erfassen und ihre Ausgangssignale der Auslöseschaltung 3 zuführen. Hierdurch läßt sich eine noch verfeinerte Erkennung und Analyse eines drohenden Fahrzeugüberschlags oder Fahrzeugaufpralls erzielen, so daß die Auslöseschaltung 3 die Auslöseentscheidung in zusätzlicher Abhängigkeit von diesen Beschleunigungsgrößen festlegen kann.

Bei dem in Fig. 1 gezeigten Ausführungsbeispiel sind der Drehratensensor und der Neigungssensor 2 in ein bereits bestehendes Insassenschutzsystem-Steuergerät 3, beispielsweise ein Airbag-Steuergerät für den Front- und/oder Seitenairbag integriert.

Das in Fig. 2 gezeigte Ausführungsbeispiel der erfindungsgemäßen Vorrichtung ist hinsichtlich des Aufbaus und der Funktionsweise der Komponenten 1, 2, 3, 5 und 6 (letztere optional) identisch wie das in Fig. 1 gezeigte Ausführungsbeispiel. Jedoch sind der Drehratensensor 1, der Neigungssensor 2 und die Auslöseschaltung 3 gemäß Fig. 2 in einem separaten Gehäuse untergebracht und somit separat nachrüstbar oder in neue Fahrzeuge selektiv einbaubar. Die Auslöseschaltung 3 ist mit einem nicht dargestellten, zentralen Steuergerät, insbesondere Airbag-Steuergerät, über eine Leitung 7 verbunden und überträgt an dieses ein Zündkommando, wenn die Auslösekriterien erfüllt sind. Bei Empfang des Zündkommandos steuert das zentrale Steuergerät die Aktivierung des Insassenschutzsystems.

## Patentansprüche

1. Vorrichtung zur Auslösung eines Insassenschutzsystems bei einer um die Kraftfahrzeug-Längsachse erfolgenden Kraftfahrzeug-Kippbewegung,
- mit einem eine Fahrzeugneigung erfassenden Neigungssensor (2),
- mit einem weiteren Sensor, der als Drehratensensor (1) ausgebildet ist, und der die Geschwindigkeit einer um die Kraftfahrzeug- Längsachse erfolgenden Kraftfahrzeugdrehung erfasst, und
- mit einer Auslöseeinrichtung (3), die das Insassenschutzsystem nur dann auslöst, wenn sowohl der Drehratensensor (1) eine bei oder oberhalb eines bestimmten Werts liegende Drehbewegung signalisiert als auch der Neigungssensor (2) einen bei oder oberhalb eines gegebenen Werts liegenden Kraftfahrzeug-Neigungswinkel anzeigt,
**dadurch gekennzeichnet,**
**dass** die Auslöseeinrichtung (3) dann, wenn das Ausgangssignal des Neigungssensors (2) eine länger als ein vorbestimmtes Zeitintervall andauernde Kipplage des Kraftfahrzeugs signalisiert, eine Aktivierung des Insassenschutzsystems sperrt, auch wenn das Ausgangssignal des Drehratensensors (1) anschließend eine Kraftfahrzeug- Kippbewegung um die Kraftfahrzeug-Längsachse signalisiert.

2. Vorrichtung nach Anspruch 1, **dadurch gekennzeichnet, dass** der Neigungssensor (2) als Neigungsschalter ausgebildet ist.

3. Vorrichtung nach einem der vorhergehenden Ansprüche, **dadurch gekennzeichnet, dass** der Drehratensensor (1) und der Neigungssensor (2) in einem separaten Gehäuse untergebracht sind.

4. Vorrichtung nach Anspruch 3, **dadurch gekennzeichnet, dass** in dem separaten Gehäuse auch eine die Ausgangssignale des Drehratensensors (1) und des Neigungssensors (2) auswertende Auswerteschaltung (3) untergebracht ist.

5. Verfahren zur Auslösung eines Insassenschutzsystems bei einer um die Kraftfahrzeug-Längsachse erfolgenden Kraftfahrzeug-Kippbewegung, bei dem das Insassenschutzsystem nur dann ausgelöst wird, wenn sowohl die gemessene Drehgeschwindigkeit der um die Kraftfahrzeug-Längsachse erfolgenden Kraftfahrzeug-Drehung als auch der gemessene Kraftfahrzeug-Neigungswinkel bestimmte Werte überschreiten, **dadurch gekennzeichnet, dass** eine Auslösung des Insassenschutzsystems gesperrt wird, wenn die Ausgangssignale eines Neigungssensors (2) und eines Drehratensensors (1) zunächst eine länger als ein vorbestimmtes Zeitintervall andauernde Kipplage des Kraftfahrzeugs signalisieren und dann das Ausgangssignal des Drehratensensors (1) eine Kraftfahrzeug-Kippbewegung um die Kraftfahrzeug längsachse signalisiert.

## Claims

1. Device for activating an occupant protection system in the event of a vehicle tilting around its longitudinal axis
- with an inclination sensor (2) that detects vehicle tilt,
- with a further sensor which is implemented as a rotation rate sensor (1) and which detects the speed of vehicle rotation around the longitudinal axis of the vehicle and
- with a trigger device (3) that only activates the occupant protection system if the rotation rate sensor (1) indicates rotation at or above a particular value and the inclination sensor (2) indicates a vehicle tilt angle at or above a given value
**characterised in that**
the trigger device (3) blocks activation of the occupant protection system if the output signal of the inclination sensor (2) indicates vehicle tilt for longer than a predefined period of time even if the output signal of the rotation rate sensor (1) subsequently indicates rotation about the longitudinal axis of the vehicle.

2. Device according to Claim 1, **characterised in that** the inclination sensor (2) is implemented as a tilt switch.

3. Device according to one of the preceding claims, **characterised in that** the rotation rate sensor (1) and the inclination sensor (2) are accommodated in a separate casing.

4. Device according to Claim 3, **characterised in that** the separate casing also accommodates an evaluation circuit (3) that evaluates the output signals of the rotation rate sensor (1) and the inclination sensor (2).

5. Method for activating an occupant protection system in the event of a vehicle tipping around its longitudinal axis whereby the occupant protection system is only activated if the measured rotational speed of the vehicle around its longitudinal axis and the measured vehicle tilt angle exceed certain values, **characterised in that** activation of the occupant protection system is blocked if the output signals of an inclination sensor (2) and a rotation rate sensor (1) initially indicate vehicle tilt for longer than a predefined period of time and then the output signal of the rotation rate sensor (1) subsequently indicates rotation about the longitudinal axis of the vehicle.

## Revendications

1. Dispositif de déclenchement d'un dispositif de protection de passager lors d'un mouvement de basculement de véhicule automobile se produisant autour de l'axe longitudinal du véhicule, comprenant
- un capteur d'inclinaison (2) détectant une inclinaison du véhicule,
- un second capteur, qui est réalisé sous forme d'un capteur de vitesse angulaire (1) et qui détecte la vitesse d'un mouvement angulaire du véhicule automobile se produisant autour de l'axe longitudinal du véhicule, et
- un dispositif de déclenchement (3) qui ne déclenche le dispositif de protection de passager que lorsque, à la fois, le capteur de vitesse angulaire (1) signale un mouvement angulaire se présentant à une valeur déterminée ou au-dessus, et le capteur d'indinaison (2) indique un angle d'inclinaison du véhicule automobile se présentant à une valeur fixée ou au-dessus,
**caractérisé en ce que** le dispositif de déclenchement (3) bloque une activation du dispositif de protection de passager lorsque le signal de sortie du capteur d'inclinaison (2) signale une position inclinée du véhicule automobile qui dure plus longtemps qu'un intervalle de temps préfixé, même si le signal de sortie du capteur de vitesse angulaire (1) signale ensuite un mouvement de basculement du véhicule automobile autour de l'axe longitudinal du véhicule.

2. Dispositif suivant la revendication 1, **caractérisé en ce que** le capteur d'inclinaison (2) est réalisé sous forme d'un interrupteur à inclinaison.

3. Dispositif suivant l'une des revendications précédentes, **caractérisé en ce que** le capteur de vitesse angulaire (1) et le capteur d'inclinaison (2) sont placés dans un boîtier séparé.

4. Dispositif suivant la revendication 3, **caractérisé en ce qu'**est également monté dans le boîtier séparé un circuit d'analyse (3) exploitant les signaux de sortie du capteur de vitesse angulaire (1) et du capteur d'inclinaison (2).

5. Procédé de déclenchement d'un dispositif de protection de passager lors d'un mouvement de basculement d'un véhicule automobile se produisant autour de l'axe longitudinal du véhicule, selon lequel le dispositif de protection de passager n'est déclenché que lorsque, à la fois, la vitesse angulaire mesurée du mouvement angulaire du véhicule automobile se produisant autour de l'axe longitudinal du véhicule et l'angle d'inclinaison mesuré du véhicule automobile dépassent des valeurs déterminées, **caractérisé en ce qu'**un déclenchement du dispositif de protection de passager est bloqué lorsque les signaux de sortie d'un capteur d'inclinaison (2) et d'un capteur de vitesse angulaire (1) signalent d'abord une position basculée du véhicule automobile durant plus longtemps qu'un intervalle de temps préfixé, puis que le signal de sortie du capteur de vitesse angulaire (1) signale un mouvement de basculement du véhicule automobile autour de l'axe longitudinal du véhicule.
